# EUROPEAN PATENT APPLICATION

(11) **EP 1 857 726 A2**
(43) Date of publication of application: **21.11.2007**
(21) Application number: 07108455.2
(22) Date of filing: 18.05.2007
(51) Int. Cl.: F16M 11/28, F16M 11/18

(54) **Flat-panel television hanger**

(30) Priority: 20.05.2006 CN 200620059411 U; 07.02.2007 CN 200720118563 U
(71) Applicant: Zhanxiang Technology (Huizhou) Co., Ltd., Guangdong Huizhou City (CN)
(72) Inventor: Chueh, Shen-Te, Huizhou City (CN)
(74) Representative: Viering, Jentschura & Partner

(57) **Abstract**

A hanger includes a rack (10) and an elevating device (30). The rack is connected to a flat-panel television. The elevating device includes a rope (37), a reel (36) and a motor (34). The rope (37) is connected to the rack (10). The reel (36) is used to reel the rope (37). The motor (34) is used to rotate the reel (36) so that the elevation of the flat-panel television is adjustable.

## Description

### BACKGROUND OF INVENTION

### 1. FIELD OF INVENTION

The present invention relates to a flat-panel television hanger.

### 2. RELATED PRIOR ART

Flat-panel televisions such as liquid crystal televisions and plasma televisions are often used in show rooms and conference rooms because they are thin, provide wide screens, generate low radiation and show digits clearly. To emphasize the advantage that a flat-panel television is thin and occupies a small space, it is often hung on a wall or from a ceiling. A hanger has to be used to hang the flat-panel television on the wall or from the ceiling.

There is a conventional hanger for hanging a flat-panel television from a ceiling. With this conventional hanger, the elevation, pivot and tilt of the flat-panel television cannot be adjusted. Therefore, the flat-panel television cannot be watched properly.

There is another conventional hanger for hanging a flat-panel television from a ceiling. With this conventional hanger, the elevation of the flat-panel television can be adjusted. The operation of this conventional hanger is however noisy.

The present invention is therefore intended to obviate or at least alleviate the problems encountered in prior art.

### SUMMARY OF INVENTION

A hanger includes a rack and an elevating device. The rack is connected to a flat-panel television. The elevating device includes a rope, a reel and a motor. The rope is connected to the rack. The reel is used to reel the rope. The motor is used to rotate the reel so that the elevation of the flat-panel television is adjustable.

The primary advantage of the hanger according to the present invention is to quietly lower the flat-panel television to a proper elevation in use and lift the flat-panel television in storage.

Other advantages, objectives and features of the present invention will become apparent from the following description referring to the attached drawings.

### BRIEF DESCRIPTION OF DRAWINGS

The present invention will be described via the detailed illustration of two embodiments referring to the drawings.
Fig. 1 is a perspective view of a hanger for hanging a flat-panel television from a ceiling according to the first embodiment of the present invention.
Fig. 2 is an exploded view of the hanger shown in Fig. 1.
Fig. 3 is an exploded view of a first portion of the hanger shown in Fig. 1.
Fig. 4 is an exploded view of a second portion of the hanger shown in Fig. 1.
Fig. 5 is an exploded view of a third portion of the hanger shown in Fig. 1.
Fig. 6 is a perspective view of the hanger in another position than shown in Fig. 1.
Fig. 7 is a perspective view of the hanger in another position than shown in Fig. 6.
Fig. 8 is a perspective view of a hanger for hanging a flat-panel television on a wall according to the second embodiment of the present invention.

### DETAILED DESCRIPTION OF EMBODIMENTS

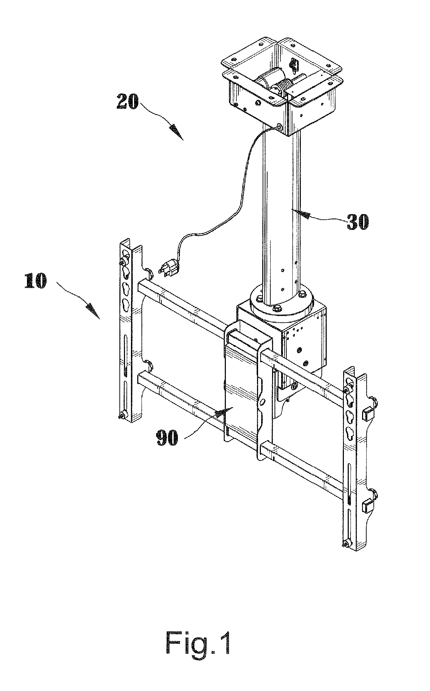

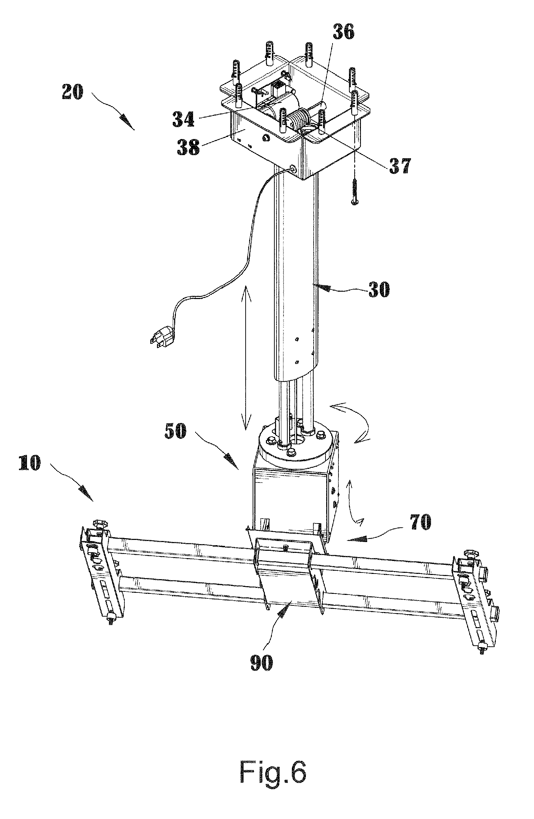

Referring to Figs. 1 through 7, there is shown a hanger according to a first embodiment of the present invention. The hanger includes a rack 10 for holding a flat-panel television and a supporting set 20 for supporting the rack 10 so that the elevation, angle and tilt of the flat-panel television is adjustable. The supporting set 20 includes an elevating device 30, a pivoting device 50 and a tilting device 70.

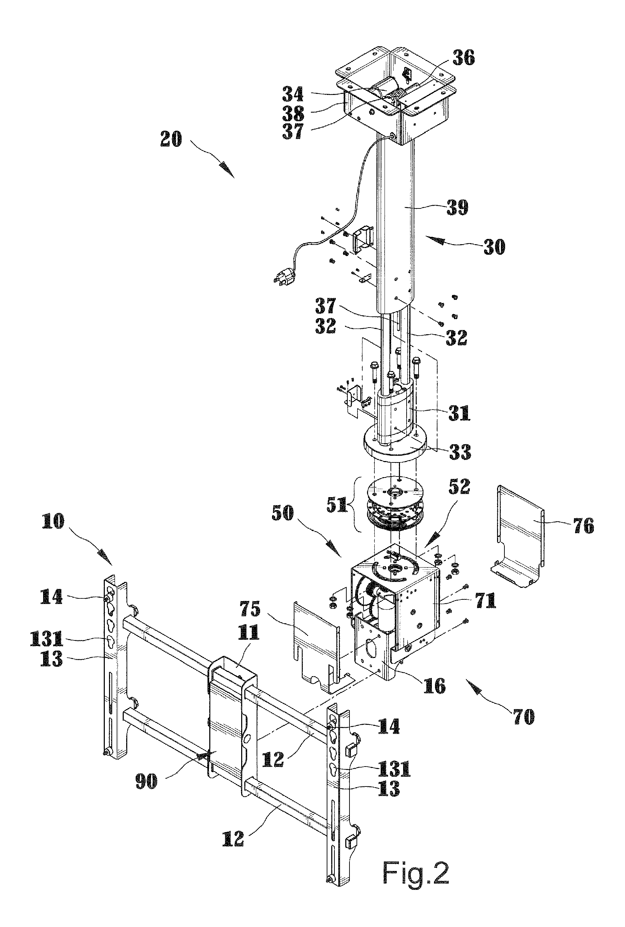

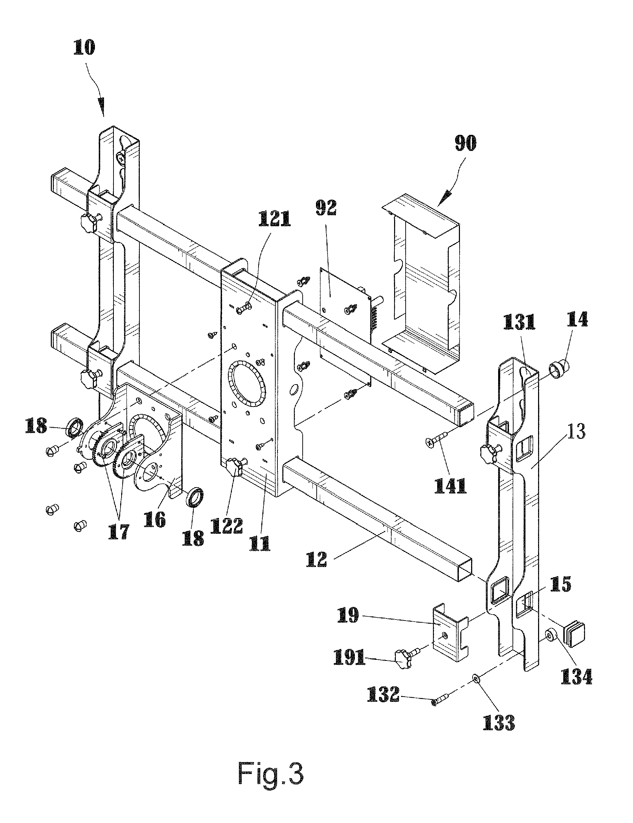

A front side of the rack 10 is shown in Fig. 2 while a rear side of the rack 10 is shown in Fig. 3. The rack 10 includes a backbone 11, two ribs 12, two angle bars 13 and a connector 16. One of the ribs 12 is secured to the backbone 11 by a threaded bolt 121 while the other rib 12 is secured to the backbone 11 by a threaded bolt 122. A knob is provided on the threaded bolt 122. A user can rotate the threaded bolt 122 by operating the knob with a bare hand.

Each of the angle bars 13 includes a middle strip and two lateral strips. Each of the lateral strips of each of the angle bars 13 includes two apertures 15 for receiving the ribs 12 so that the angle bars 13 are movably mounted on the ribs 12. Pushers 19 and threaded bolts 191 are used to retain the position of the angle bars 13 on the ribs 12. The middle strip of each of the angle bars 13 includes apertures 131. Two anchors 14 are secured to the flat-panel television by screws 141. Two pads 134 are secured to the flat-panel television by screws 132. A washer 133 is provided between each of the pads 134 and the enlarged head of a related one of the screws 132.

The anchors 14 can be disposed in selective ones of the apertures 131 while the pads 134 are pressed against the angle bars 13. Thus, the flat-panel television is attached to the rack 10.

The connector 16 includes two gears 17 formed thereon. The connector 16 is secured to the rear side of the backbone 11.

A control unit 90 is used to control the hanger. The control unit 90 includes a circuit board 92 attached to the front side of the backbone 11 and a cover attached to the front side of the backbone 11 for covering the circuit board 92. The control unit 90 may be a wire control unit or a remote control unit based on a radio frequency technique. Or may be a unit with both wire control and remote control based on a radio frequency technique.

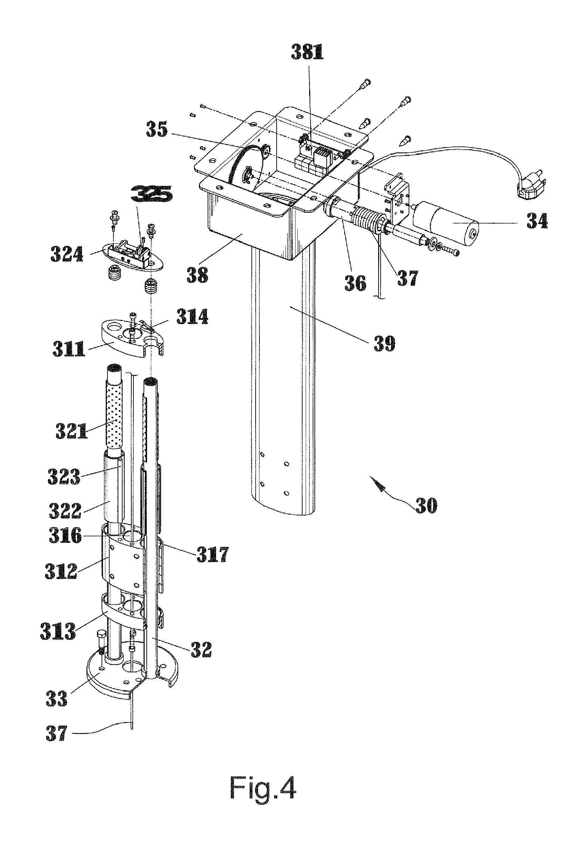

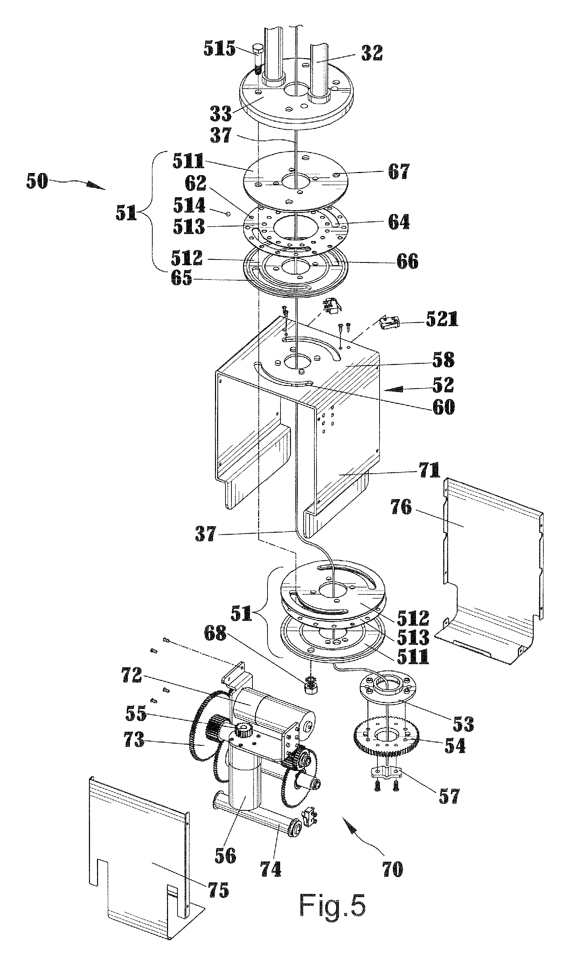

Referring to Figs. 4 and 5, the elevating device 30 includes a case 38, a tube 39, a guide 31, two rods 32, an upper disc 324, a lower disc 33, a motor 34, a gear system 35, a reel 36 and a rope 37.

The case 38 can be attached to a ceiling. The tube 39 is extended from the case 38. The guide 31 includes an upper block 311, a lower block 313 and a middle block 312 located between the upper block 311 and the lower block 313. A micro-switch 314 is provided on the upper block 311. The guide 31 includes a middle tunnel 316 defined therein and two lateral tunnels 317 defined therein.

The rods 32 are movably inserted through the lateral tunnels 317. A lining 321 is provided between a sleeve 322 and each of the rods 32. Each of the sleeves 322 is formed with a ridge 323. The upper disc 324 is secured to upper ends of the rods 32. A pulley 325 is provided on the upper disc 324. The lower disc 33 is secured to lower ends of the rods 32. The guide 31 is fit in and secured to the tube 39. The rods 32 can be inserted into and drawn from the tube 39. The rods 32 are smoothly moveable relative to the tube 39 for the use of the guide 31.

The motor 34, the gear system 35 and the reel 36 are disposed in the case 38. The motor 34 is engaged with the gear system 35. The gear system 35 is connected to the reel 36. The rope 37 includes an upper end secured to the reel 36 and a lower end secured to the lower disc 33 or a portion of the pivoting device 50. The rope 37 can be wound on the reel 36. The direction of the rope 37 is changed by the pulley 325. The rope 37 is directed through the middle tunnel 316 of the guide 31.

A circuit board 381 is disposed in the case 38 and electrically connected to the micro-switch 314.

The motor 34 can be actuated to rotate, through the gear system 35, the reel 36 in a direction to wound the rope 37, thus lifting the flat-panel television. The motor 34 can be actuated to rotate the reel 36 in an opposite direction to release the rope 37, thus lowering the flat-panel television. The motor 34 can be turned off when the micro-switch 314 is reached by the upper disc 324.

The pivoting device 50 includes a frame 52, upper and lower bearings 51, a ring 53, a gear 54, a pinion 55 and a motor 56. The frame 52 includes a middle portion 58 and two lateral portions 71 extended downwards from the middle portion 58. Two arched slots 60 are defined in the middle portion 58 of the frame 52.

Each of the bearings 51 includes a first ring 511, a second ring 512, a third ring 513 and balls 514. The third ring 513 and the balls 514 are provided between the rings 511 and 512. The third ring 513 includes apertures 62 for receiving the balls 514 and two arched slots 64 corresponding to the arched slots 60. The second ring 512 includes a groove 65 for receiving the balls 514 and two arched slots 66 corresponding to the arched slots 60. The first ring 511 includes apertures 67 defined therein.

The rope 37 is directed through the lower disc 33, the upper bearing 51, the frame 52, the lower bearing 51, the ring 53 and the gear 54. The lower end of the rope 37 is clamped between the gear 54 and a pusher 57 that is secured to the gear 54 by threaded bolts.

The middle portion 58 of the frame 52 is located between the bearings 51. Threaded bolts 515 are inserted through apertures defined in the lower disc 33, the apertures 67 and the arched slots 64, 66 and 60. The threaded bolts 515 are engaged with nuts 68. Thus, the bearings 51 and the frame 52 are attached to the lower disc 33, and the frame 52 can be rotated relative to the lower disc 33. The ring 53 is attached to the first ring 511 of the lower bearing 51. The gear 54 is attached to the ring 53. Thus, the gear 54 cannot be rotated relative to the lower disc 33.

The pinion 55 is engaged with the gear 54. The motor 56 is connected to the pinion 55. The motor 56 is attached to one of the lateral portions 71 of the frame 52. The motor 56 can be actuated to rotate the pinion 55 relative to the gear 54 so that the frame 52 is rotated relative to the lower disc 33.

Two covers 75 and 76 are attached to the frame 52 for concealing and protecting the pivoting device 50 and the tilting device 70.

Referring to Figs. 2 and 5, the tilting device 70 includes a shaft 74 on which the gears 17 of the rack 10 are mounted with two bearings 18. The tilting device 70 further includes a motor 72 and a gear system 73. The motor 72 is attached to one of the lateral portions 71 of the frame 52. The gear system 73 is connected to the motor 72 on one hand and engaged with the gears 17 of the rack 10 on the other hand. The motor 72 can be actuated to rotate the gears 17 of the rack 10 through the gear system 73, thus tilting the rack 10 and therefore the flat-panel television. The motors 34, 56 and 72 are electrically connected to the control unit 90.

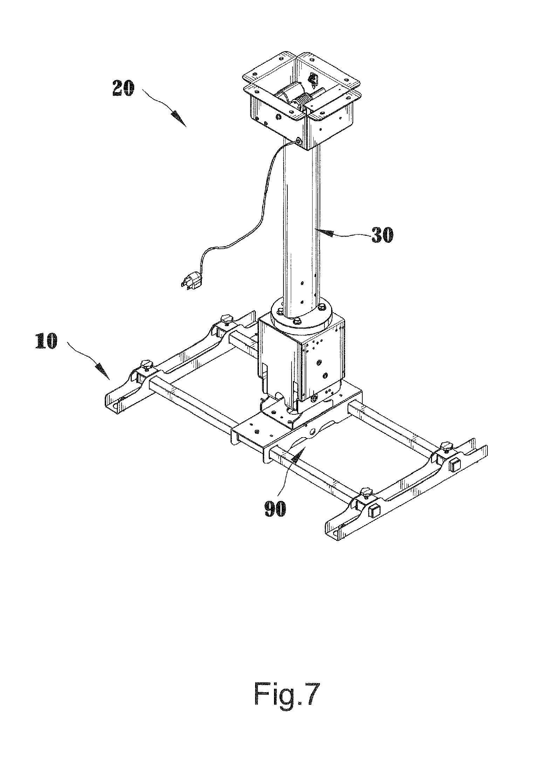

Referring to Fig. 7, the elevation, angle and tilt of the rack 10 are adjustable by operating the control unit 90. The rack 10 can be located horizontally and lifted so that it is close to the ceiling.

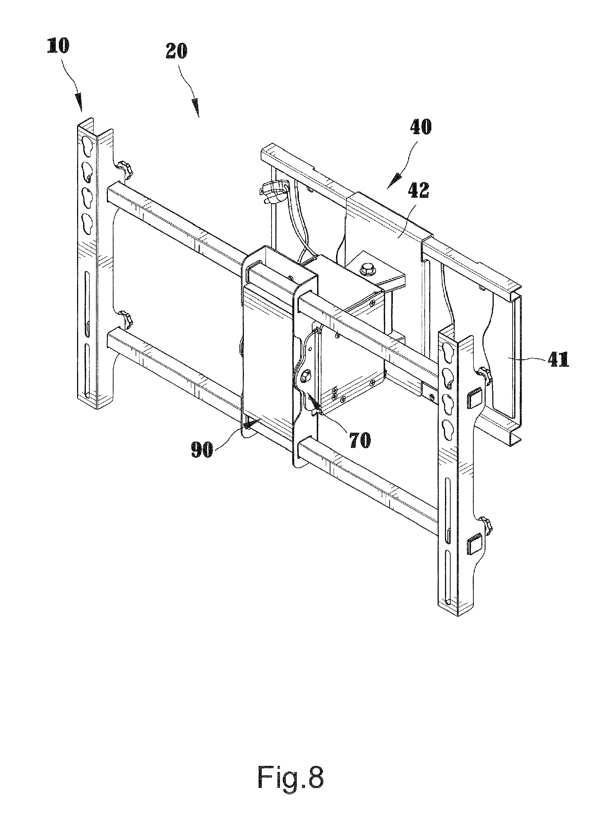

Referring to Fig. 8, there is shown a hanger according to a second embodiment of the present invention. The second embodiment is like the first embodiment except including a mount 40 instead of the elevating device 30. The mount 40 includes a rail 41 attached to a wall and a slide 42 movably mounted on the rail 41. The pivoting device 50 is attached to the slide 42. Hence, the horizontal position, instead of the elevation, of the rack 10 is adjustable.

The present invention has been described via the detailed illustration of the embodiments. Those skilled in the art can derive variations from the embodiments without departing from the scope of the present invention. Therefore, the embodiments shall not limit the scope of the present invention defined in the claims.

## Claims

1. A hanger comprising:
a rack (10) connected to a flat-panel television; and
an elevating device (30) comprising a rope (37) connected to the rack (10), a reel (36) for reeling the rope (37) and a motor (34) for rotating the reel (36) so that the elevation of the flat-panel television is adjustable.

2. The hanger according to claim 1 wherein the elevating device comprises a case (38) attached to the ceiling for containing the reel (36) and the motor (34).

3. The hanger according to claim 1 wherein the elevating device (30) comprises a gear system (35) for connecting the reel (36) to the motor (34).

4. The hanger according to claim 1 wherein the elevating device (30) comprises:
a tube (39) attached to a ceiling;
two rods (32) each comprising an upper end movably inserted in the tube (39) and a lower end connected to the rack (10); and
a guide (31) fit in the tube (39) for guiding the rods (32).

5. The hanger according to claim 4 wherein the elevating device (30) comprises a disc (33) attached to the lower ends of the rods (32) on one hand and connected to rack (10) on the other hand.

6. The hanger according to claim 5 comprising a pivoting device (50) provided between the rack (10) and the disc (33) so that the angle of the rack (10) is adjustable.

7. The hanger according to claim 6 wherein the pivoting device (50) comprises:
a frame (52) pivotally connected to the disc (33);
a gear (54) non-rotationally connected to the elevating device (30);
a motor (56) connected to the frame (52); and
a gear system (73) connected to the motor (56) on one hand and engaged with the gear (17) on the other hand.

8. The hanger according to claim 7 wherein the pivoting device (50) comprises:
an upper bearing (51) comprising a first ring (511) attached to the disc (33) and a second ring (512) attached to the frame (52); and
a lower bearing (51) comprising a first ring (511) attached to the gear (54) and a second ring (512) attached to the frame (52).

9. The hanger according to claim 8 wherein each of the upper and lower bearings (51) comprises:
a third ring (513) disposed between the first and second rings (511; 512) and formed with apertures (62); and
balls (514) disposed in the apertures (62) for rolling between the first and second rings (511; 512).

10. The hanger according to claim 9 wherein the second ring (512) comprises an annular groove (65) for receiving the balls (514).

11. The hanger according to claim 10 wherein the first ring (511) comprises apertures (67) defined therein, and the second ring (512) comprises two arched slots defined therein, and the third ring (513) comprises two arched apertures (64) defined therein, and the pivoting device (50) comprises two threaded bolts (515) inserted in the apertures through the arched slots (64; 66; 60).

12. The hanger according to claim 8 wherein the frame (52) comprises:
a middle portion (58) provided between the second rings (512) of the upper and lower bearings (51); and
two lateral portions (71) extended from the middle portion (58).

13. The hanger according to claim 12 comprising two covers (75; 76) attached to the lateral portions of the frame (52) for concealing and protecting the pivoting device (50).

14. The hanger according to claim 5 comprising a tilting device (70) provided between the rack (10) and the disc (33) so that the tilt of the rack (10) is adjustable.

15. The hanger according to claim 14 wherein the tilting device (70) comprises:
a connector (16) attached to the rack (10) and formed with at least one gear (17);
a shaft (74) attached to the disc (33) for rotationally supporting the gear (17);
a motor (72) attached to the disc (33); and
a gear system (73) connected to the motor (72) on one hand and engaged with the gear (17) on the other hand.

16. The hanger according to claim 1 comprising a control unit (90) electrically connected to the elevating device (30).

17. The hanger according to claim 16 wherein the control unit (90) is a wire control unit.

18. The hanger according to claim 16 comprising a control unit (90) is radio frequency control unit.

19. The hanger according to claim 6 comprising a control unit (90) electrically connected to the elevating and pivoting devices.

20. The hanger according to claim 14 comprising a control unit (90) electrically connected to the elevating and tilting devices.

21. A hanger comprising:
a rack (10) connected to a flat-panel television;
a tilting device (70) connected to the rack (10) so that the tilt of the rack is adjustable; and
a pivoting device (50) connected to the tilting device so that the angle of the tilting device is adjustable.

22. The hanger according to claim 21 comprising a mount (40) connected to the pivoting device (50) on one hand and connected to a wall (50) on the other hand so that the horizontal position of the pivoting device is adjustable.

23. The hanger according to claim 22 wherein the mount comprises:
a rail (41) attached to the wall; and
a slide (42) movably mounted the rail (41) on one hand and attached to the pivoting device on the other hand.
